# EUROPEAN PATENT APPLICATION

(11) **EP 2 683 146 A1**
(43) Date of publication of application: **08.01.2014**
(21) Application number: 13170334.0
(22) Date of filing: 03.06.2013
(51) Int. Cl.: H04M 1/725

(54) **Smartphone and microcontroller based remote monitoring and control system**

(30) Priority: 05.07.2012 GB 201211944
(71) Applicant: Lambert, Martin, Chinnor Oxfordshire OX39 4NH (GB)
(72) Inventor: Lambert, Martin, Chinnor Oxfordshire OX39 4NH (GB)

(57) **Abstract**

A smartphone (3) based remote monitoring and control system which includes a microcontroller unit (5) to which are coupled (8) one or more external sensors and/or actuators (7). The microcontroller unit (5) connects between the smartphone charger (1) and the smartphone (3), draws power from the smartphone charger (1) and charges the smartphone (3) via standard cables (2 and 4). The smartphone (1) configures and controls the microcontroller unit (3) and updates its firmware. In one mode the smartphone (1) logs data from the external sensors (7) attached to the microcontroller unit (3) and from sensors onboard the smartphone (3), combines the sensor data, generates textual and graphical reports and alerts, and conveys them to the external world via any of the standard networking capabilities of the smartphone (3). In another mode the smartphone (3) receives commands from the external world via any of its standard networking capabilities: to configure the smartphone (3) and/or microcontroller unit (5), and/or to activate actuators (7) controlled by the microcontroller unit (5) or the smartphone (3). End users can use this system remotely, from any Internet- or cellular-enabled device, without requiring additional special-purpose hardware, software or services.

## Description

Products have long been available for the monitoring and control of remote assets.

Pre-Internet architectures used special-purpose monitoring hardware installed at remote location(s) which included one or more sensors (e.g. temperature, humidity, levels) and a power supply. This hardware typically monitored and stored environmental data, gathered from an array of sensors, and periodically uploaded that data to a central monitoring station via modems connecting over telephone lines. See [ONKEN ET AL, USP 7457399, SENSING DEVICE FOR MONITORING CONDITIONS AT A REMOTE LOCATION AND METHOD THEREFOR] for a representative patent pertaining to these pre-Internet architectures. Typical applications included burglar alarms, monitoring medical conditions in hospitals and at home and warehouse and refrigeration management.

With the advent of the Internet remote monitoring and control systems were extended to report sensor data to central monitoring stations over the Internet, and to receive command and control instructions over the Internet. See [WOLFE ET AL, US6560543, METHOD FOR MONITORING A PUBLIC WATER TREATMENT SYSTEM] for a description of an Internet-based remote monitoring system for municipal water treatment plants. Advances included both using the Internet as a lower cost and potentially more reliable means to convey control and monitoring information between remote monitored locations and the central monitoring station, and also the increasing use of standardised, non-proprietary Internet protocols for conveying that information, e.g. FTP (file transfer protocol), RPC (remote procedure call) and SMTP (simple mail transfer protocol, email).

Remote monitoring of medical data has been particularly innovative in terms of advancing the state of the art in remote monitoring and control, perhaps because of the dramatic cost savings resulting in being able to monitor patients in their homes. See [PEIFER ET AL, US5987519, TELEMEDICINE SYSTEM USING VOICE VIDEO AND DATA ENCAPSULATION AND DE-ENCAPSULATION FOR COMMUNICATING MEDICAL INFORMATION BETWEEN CENTRAL MONITORING STATIONS AND REMOTE PATIENT MONITORING STATIONS] for an early example of a system capable of using a wide range of modern network technologies, including the Internet, to connect the remote monitoring system to a central monitoring station.

Roughly contemporaneous with the arrival of the Internet was the arrival of modern cellular phone networks. This offered vendors the ability to connect their remote monitoring and control systems to the Internet wirelessly, over cellular phone networks, where previously remote monitoring systems had to leverage the telephone landline network via modems or leased lines. The significant advantage was easier location of remote monitoring systems, which could now be placed in locations where telephone or leased lines might not be available. See [DURIO, US20110241871(A1), SENSOR ALERT] for an example of a remote monitoring solution using a cellular phone, but note that the phone in this case is simply used as a 'dumb' modem.

Up to this point in the evolution of remote monitoring and control systems they were expensive, proprietary systems designed for use in industrial distributed monitoring applications or insurance-funded home medical applications. Industrial applications typically involved arrays of distributed sensors reporting data up through tiered levels of collectors and concentrators, which in some cases performed intermediate processing (e.g. generating alerts when sensor values exceeded thresholds) before forwarding the sensor data to centralised monitoring services. See [CAMPBELL ET AL, US7391298(B1) - WIRELESS SYSTEM FOR MONITORING AND REACTING TO EVENTS AT A REMOTE LOCATION] for an example of an industrial remote monitoring and control architecture. Home medical applications were somewhat simpler, involving special-purpose medical sensors using cellphones as modems to connect back to centralised monitoring stations via the cellular network. See [LIU, US2011275353(A1) - METHODS AND APPARATUS OF A REMOTE MONITORING SYSTEM] for an example of such an architecture. Another example relevant to the current invention is [JACQUES, US2008007431(A1), REMOTE MONITORING SYSTEM] where remote monitors on boats left in marinas send reports to a cellular phone via the cellular network (without using a cellular phone at the monitored location).

These systems were expensive and out of reach of most individual consumers, with the exceptions being wealthy boat-owners and insurance-funded medical patients. Most remote monitoring and control systems used proprietary custom hardware and required subscriptions to staffed monitoring services, for example burglar alarm companies.

The breakthrough in reducing the cost of remote monitoring and control systems to the point of affordability by individual consumers was the advent of the 'smartphone'. For the purpose of this document the definition of a smartphone is considered to be well understood in the public domain - basically a phone capable of downloading, updating and running third party applications ('app'), wireless connection to the cellular phone network, Wi-Fi networks, Bluetooth and other current and future near, local and far wireless networks, and connecting to external peripheral devices (such as PCs, USB device, etc.). While the remainder of this document refers to smartphones this is also taken to mean other consumer electronic devices with broadly similar capabilities, such as tablets, PDA-type devices, and similar devices with or without cellular connectivity (e.g. iPod Touch).

Smartphones are key to the evolution of remote monitoring and control in general, and this invention in particular, because at a very low cost (given the volumes in which they are produced and subsidies from the cellular carriers) smartphones include out-of-the-box several key ingredients of remote monitoring and control systems:
- Wireless connectivity to the Internet, cellular and phone networks.
- Significant onboard processing capability, including the ability to run third party applications ('app'), and to update these apps manually or automatically.
- An array of onboard sensors, including AC power, battery, GPS geolocation, camera, audio, accelerometers, etc.
- Ability to connect to peripheral devices, e.g. PCs, external sensors.

These capabilities enable the smartphone to play a far more important and cost-effective role within remote monitoring and control systems than simply providing a modem-style gateway to the cellular network and/or Internet.

One application of smartphones in remote monitoring and control has been to receive and display reports and alerts sent from the remote monitoring and control system, which is possible since these reports and alerts are nowadays usually sent using standard protocols and format such as SMS text messages or emails. See [JACQUES, US2008007431 (A1), REMOTE MONITORING SYSTEM] for an example of this architecture.

Another, related application of smartphones in remote monitoring and control is the use of smartphones to send commands to a remote monitoring and control system. See [SUZUKI TATSUO, JP2005051763, REMOTE CONTROL SYSTEMS USING CELLULAR PHONE] which uses a cellular phone to remotely command and control a tracker-style device (for example installed in a car to track unauthorised access or theft).

There are examples of smartphones being used to implement complete remote monitoring and control systems, leveraging only their onboard sensors. See [WOONG, KR20050002522, HOME SECURITY METHOD USING A CELLULAR PHONE CAMERA AND A WIRELESS TRANSCEIVING ARCHITECTURE, SPECIALLY WITH REGARDS TO MONITORING A HOME OR AN OFFICE FROM A REMOTE PLACE BY USING A CELLULAR PHONE, AND CONFIRMING ABNORMAL SITUATIONS OR AN INVADER] where a camera-enabled smartphone is left at a premises and takes photos and uploads them to other designated devices (using picture messaging) when it detects changes in its camera field of view.

There are examples of smartphones connecting to external sensors to implement remote monitoring and control systems. See [JUN, US2011275353(A1), METHODS AND APPARATUS OF A REMOTE MONITORING SYSTEM] where medical sensors are connected wirelessly (via Bluetooth) to a smartphone, which then stores and transmits the sensor data onwards. There is not much difference in this case from a cellular phone simply being used as a gateway, apart from the assumption that the smartphone in the above patent is probably polling the attached sensors and is in control of the data upload (as opposed to the smartphone being controlled by the sensors).

There are fewer examples in the prior art of smartphones using both onboard and external sensors together as part of a remote monitoring and control system. See [WALDE, GB2388194(A), REMOTE MEDICAL MONITOR UTILISING A MOBILE TELEPHONE] in which a smartphone running a medical software package receives data from one or more wireless medical sensors, generates alerts by comparing these values against predefined thresholds, and forwards these alerts as SMS messages. In response to these alerts the smartphone can also forward GPS information in the SMS message, from its onboard GPS sensor. Also see [COOK ET AL, US20110195701(A1), SYSTEM AND METHOD FOR MOBILE MONITORING OF NON-ASSOCIATED TAGS] which uses a smartphone to connect wirelessly to sensors implemented as Wi-Fi RFID tags, to gather sensor data from those tags and relay that data onwards using SMS, email, etc. Again the reception of certain sensor data can trigger the gathering of additional data from sensors onboard the smartphone, such as activating the onboard video camera.

However, there are still several problems with current smartphone-based remote monitoring and control systems:
- If they rely on onboard sensors alone (i.e. those sensors included in the off-the-shelf smartphone) those onboard sensors are actually quite limited in their applicability to general purpose remote monitoring and control. The onboard sensors have been designed for the mass-market, mainstream application for which the smartphone itself was designed: to travel with and assist an individual. So for example a GPS is present to provide everyday geolocation services (such as route planning and service location), while it is unlikely that an accurate humidity or far-field passive infrared (PIR) motion sensor will ever be included, because it is not of much utility to the typical smartphone user. Another reason why inclusion of general purpose sensors into smartphones is unlikely is that it is fraught with technical difficulty. For example it would be very difficult to decouple an onboard smartphone temperature sensor from the waste heat generated by the smartphone electronics.
- Smartphone-based remote monitoring and control systems that utilise external sensors assume that those sensors will connect to the smartphone via near-field wireless technologies such as Bluetooth. This is because most smartphones do not have an obvious alternative means to connect to external peripheral devices (and general purpose remote monitoring and control implies the ability to connect to multiple sensors and/or actuators, the lack of which multiple capability would be a serious limitation). This wireless connectivity implies either that the smartphone must directly control each sensor, which limits the number of available sensors since smartphones do not run on the kind of low-latency, high-throughput operating systems capable of directly interfacing with most sensors (for example, a DHT-22 temperature-humidity sensor requires clock signals in the 20-40 microsecond range), or implies that each sensor must include considerable control circuitry to enable it to both independently manage the sensor element and communicate with the smartphone. The latter requirement for intelligent sensors limits the number of available sensors and dramatically raises their cost and complexity.
- It is difficult to add or change functionality on smartphone-based remote monitoring and control systems that utilise intelligent external sensors (see above). It is easy to update apps on the smartphone (the major smartphone operating systems integrate with web-based marketplaces that offer manual and automatic app updating) but updating the capabilities of the sensors themselves is often difficult if not possible. An example of a possible required update would be a revised algorithm for screening out small animal activity from within a passive infrared sensor.

The invention described herein overcomes these limitations of previous smartphone-based remote monitoring and control systems and for the first time brings the cost of such systems down to levels affordable to individual consumers, by combining a smartphone with a general-purpose microcontroller unit capable of hosting a wide and extensible range of external, low-cost sensors and actuators. An app running on the smartphone controls the overall system and can download updated firmware to the microcontroller unit.

The invention will now be described solely by way of example and with reference to the accompanying drawings in which:
- Figure 1 shows a smartphone, its charger and connecting cable.
- Figure 2 shows a microcontroller unit with associated sensor and actuator units, inserted between the smartphone and charger, according to the invention.
- Figure 3 shows an example circuit schematic for a sensor unit.
- Figure 4 shows an example circuit schematic for the microcontroller unit.

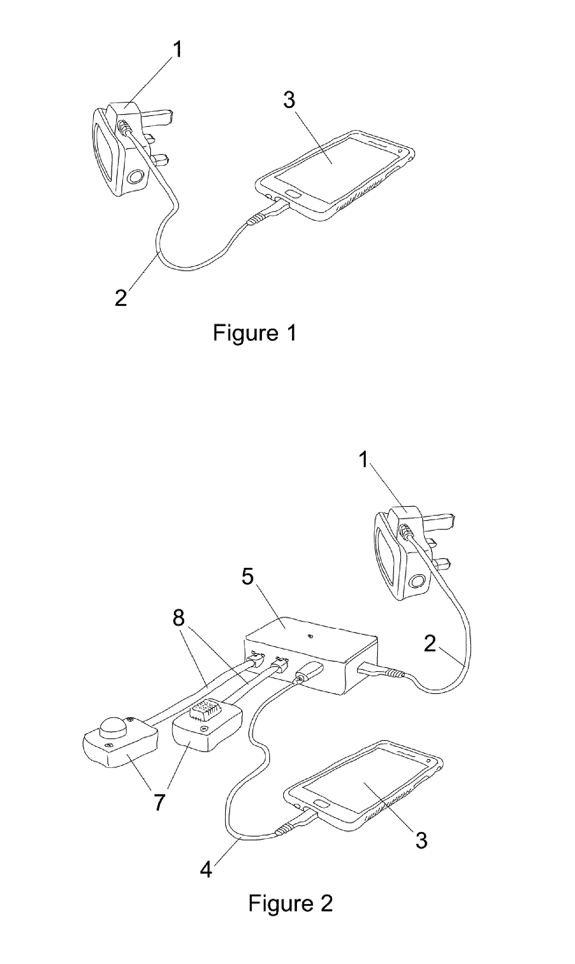

Figure 1 shows a typical smartphone (3), its charger (1) and the cable (2) that transfers power from the charger to the smartphone. Low-end versions of such smartphones can be purchased by consumers at very low cost, either without SIM cards (in which case they can still communicate over Wi-Fi networks) or with pay-as-you-go or monthly payment SIM cards.

Figure 2 shows a microcontroller unit (5) inserted between the smartphone charger (1) and the smartphone (2) using the same standard cables (2 and 4) as supported by the smartphone. The microcontroller unit (5) draws power from the smartphone charger (1) for its own operation while passing on power via cable (4) to charge the smartphone. The microcontroller unit (5) communicates with the smartphone (1) either via the cable (4), where the smartphone offers such connectivity, or over a separate cable (not shown) or a wireless connection, for example Bluetooth. One or more external sensors and/or actuators (7) are connected to the microcontroller unit (5) via cables (8).

The smartphone (3) runs an app that provides the following functionality:
- Periodically or in response to onboard or external sensor data the smartphone app collects data from onboard sensors and stores that data in an internal database. Modern smartphones provide sophisticated onboard databases, for example Android includes a copy of the SQLite relational database.
- Periodically or in response to onboard or external sensor data the smartphone app collects data from the external sensors (7) connected to the microcontroller unit (5) and stores that data in an internal database. The smartphone can either poll the microcontroller unit (5) or the microcontroller unit can proactively send external sensor data to the smartphone. The smartphone app stores this data into an internal database.
- Periodically or in response to onboard or external sensor data the smartphone app generates graphical and/or textual reports by querying its internal database and sends them via standard protocols such as (but not limited to) SMS text message, email or HTTP upload to third parties whose addresses are configured into the smartphone.
- Periodically or in response to onboard or external sensor data the smartphone app compares current and historical sensor data to various thresholds configured into the smartphone app and generates and sends graphical and/or textual alerts to third parties whose addresses are configured into the smartphone app. For example, an alert that the temperature has been below freezing for more than an hour.
- The smartphone app can receive commands via standard protocols such as (but not limited to) SMS text message or email and, in response to those commands, update its own configuration or the configuration of the attached microcontroller unit, generate and return reports or activate actuators connected to the smartphone or microcontroller unit. For example, after receiving an alert that the temperature has fallen below freezing the end user could send a command to the smartphone to switch on a heater controlled by an actuator (7).
- In order to reduce the cost of the sensor and/or actuators (7) most of their control logic is implemented by the microcontroller unit (5). In order to be able to easily and remotely update the firmware of the microcontroller unit, in order to update sensor and/or actuator functionality or add support for new sensors and/or actuators, the smartphone app can download and store new firmware images which can be installed by a bootloader running on the microcontroller unit (see below).
- The smartphone app provides a user interface through which the end user can configure the overall application, including (but not limited to) configuring the sensors, alert thresholds, report and alert destinations, scheduling of sensor polls and report generation, actuation, reports, security settings, storage, etc.
- The networking protocols required to communicate with the microcontroller unit (5).

The microcontroller unit (5) provides the following functionality:
- The networking protocols required to communicate with the smartphone (3). For example, for Android this would involve implementing Android Debug Bridge (ADB) or Android Development Kit (ADK) over a USB connection, or over Bluetooth. Equivalent wired and wireless protocols are available for other smartphone, tablet and PDA platforms.
- The control protocols required to integrate various low-cost sensors and actuators. Microcontrollers (for example from the Atmel AVR family) are far better suited to this than smartphones themselves, because microcontrollers can run embedded software at very high speed with very little latency (unlike high-level operating systems like Android or iOS which struggle to achieve millisecond latencies, when microsecond latencies are often required). Microcontrollers are in fact designed to interface directly with hardware such as sensors and actuators, thus requiring very little additional logic on the sensor or actuator itself (other than the sensing or actuating element).
- The microcontroller unit (5) is designed with multiple general purpose connection ports that can accept a wide range of sensor or actuators (7), making adding new sensors and/or actuators very simple.
- The microcontroller unit (5) has internal memory and can store sensor data for relatively short periods (e.g. a day) in order to perform local trending and thresholding, but the smartphone is used for longer term storage and analysis.
- The microcontroller unit (5) typically polls the sensors as frequently as they will allow, and either sends the sensor data to the smartphone periodically or on an alert condition, or in receipt of a poll request from the smartphone.
- The microcontroller unit runs two firmwares. One is the firmware application that controls the sensors and actuators (7) and communicates with the smartphone (3). The other is a semi-permanent bootloader that is also capable of communicating with the smartphone (7). Both are stored in non-volatile memory within the microcontroller unit (5). The bootloader's function is to check with the smartphone for new versions of the application firmware. If this exists the bootloader downloads it from the smartphone, replaces the application firmware with it in non-volatile memory and then executes the new application firmware. It is also possible (although uncommon) for the bootloader to update itself from the smartphone. The bootloader executes on power-up or reset conditions, and can be activated for the application firmware in response to a command sent from the smartphone.
- The microcontroller unit is designed for low power consumption so that the smartphone charger (1) can power it and its sensors and/or actuators (7) while also charging the smartphone (3). This novel physical architecture reduces cost by not requiring separate power supplies for the smartphone and microcontroller unit.

The sensor/actuators (7) provide the following functionality:
- Through the use of EEPROM or equivalent non-volatile memory each sensor or actuator (7) can identify itself to the microcontroller unit (5). This allows the microcontroller unit (5) to accept the sensor or actuator on any available port, tag the sensor or actuator data stream with name, range and calibration information and pass that on to the smartphone (3).
- The sensor/actuators (7) receive power from the microcontroller unit (although in some cases, e.g. actuation of higher-voltage power supplies, they may also receive external power) and provide minimal interface logic to the respective sensor or actuator element. To reduce the cost of the overall system most of the sensor management is offloaded to the microcontroller unit (which can handle several sensors and actuators concurrently). For example, a DHT-22 temperature/humidity sensor requires the implementation of a proprietary 1-wire protocol. In the preferred implementation of this invention this protocol is implemented by the microcontroller unit and not by the sensor or actuator (7). Note that nothing in this invention precludes using more sophisticated interface electronics in the sensor and/or actuator units, up to and including separate microcontrollers; it is just that the preferred implementation from a cost perspective is for most of the sensor or actuator management to be performed by the shared microcontroller unit.

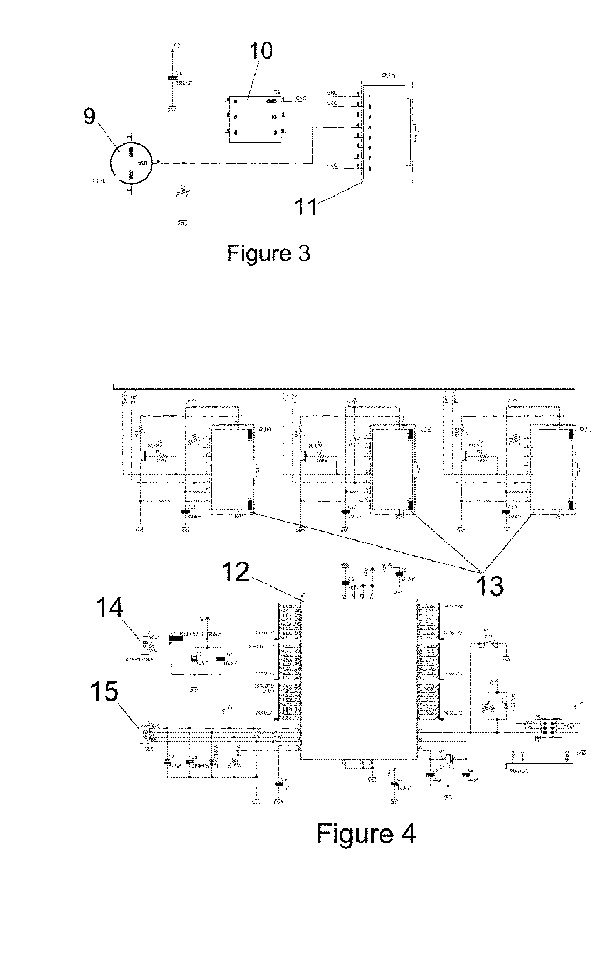

Figure 3 shows an example circuit schematic for a sensor or actuator (7). In this example schematic a passive infrared (PIR) sensor element (9) is connected to an RJ45 connector (11) along with an EEPROM (10) that has been programmed with identification and calibration information for the sensor element (9). The RJ45 connector (11) will be connected via the cable (8) to the microcontroller unit (5) shown in Figure 2. It should be understood that this schematic is only intended to illustrate the aspect of this invention that sensors and/or actuators need only contain minimal interface logic (in this case an EEPROM and a few passive components such as pulldown resistors and decoupling capacitors familiar to practitioners of the art) while most of the sensor interface and control logic is implemented by the microcontroller unit (5). This patent applies to all functionally equivalent designs.

Figure 4 shows an example circuit schematic for the microcontroller unit (5). In this example schematic general purpose I/O pins of a microcontroller chip (12) are connected to one or more external ports (13), in this case RJ45 connectors. A micro-B USB connector (14) inputs power to the microcontroller unit (5) from the smartphone charger (1) and cable (2) and a USB A connector provides power and communication from the microcontroller (12) to the smartphone (3). Additional components such as decoupling capacitors, ESD protection, serial programming/debugging and reset logic are not described as they would be familiar to any practitioner of the art. This example is specialised for use with Android phones (given the standardised USB connectors) but it will be understood that the salient feature of the design is that the microcontroller (12) performs the majority of interfacing logic for external sensors and/or actuators (7) while implementing a communication and bootloading protocol to the smartphone (3). This patent applies to all functionally equivalent designs, for example designs that use alternative connectors and protocols to communicate with the smartphone (3) and sensors and/or actuators (7), over wired or wireless connections.

A key aspect of this invention is that a smartphone is the controller of a complete remote monitoring and control system, managing both onboard and external sensors (the latter via an external microcontroller unit that it controls, configures and updates) and locally creating and distributing its own reports and alerts. There is no longer a requirement for a centralised monitoring service and no requirement for uploading of sensor data to a centralised web or cloud application, or hosted or manned service, to generate reports and alerts (and charge the consumer accordingly). This novel smartphone- and microcontroller-based remote monitoring and control system reports directly to interested parties (e.g. a home owner away on vacation) via standard network and application protocols such as SMS and email, which can be read on any modern consumer device (PCs, tablets, smartphones).

The smartphone also, in the same novel architecture, supports both onboard and external actuators (as well as onboard and external sensors) and configuration, reporting and actuation commands sent to it via standard protocols from any modern consumer device. For example, the homeowner could receive an alert on his smartphone, while on holiday in Greece, telling him that the temperature is below freezing at home. He could send a request to obtain a further humidity reading and then instruct the remote smartphone system to switch on the home central heating (via an actuator onboard the remote smartphone, e.g. Wi-Fi home automation, or an external actuator connected to the microcontroller unit, e.g. a relay connected to a power block).

The smartphone can also download updated firmware for the microcontroller unit from the Internet and install it into the microcontroller unit's non-volatile memory, in cooperation with bootloader firmware running on the microcontroller unit.

## Claims

1. A remote monitoring and control system comprising a smartphone equipped with onboard sensors, connected to a microcontroller unit, and one or more external sensors and/or actuators connected to the microcontroller unit, where the smartphone performs all the data collection, control, configuration, report and alert generation activities for the combined onboard and external sensors and/or actuators and generates and sends monitoring reports, and receives remote control and configuration commands, to/from one or more remote end users via standard network and application protocols; the entire system of smartphone, microcontroller unit, sensors and/or actuators being left behind at a remote monitored location.

2. A remote monitoring and control system according to claim 1, in which the microcontroller unit shares the same power supply as the smartphone.

3. A remote monitoring and control system according to claim 1, in which the microcontroller unit connects to the smartphone via the same wireless or wired connection the smartphone uses for connection to a PC.

4. A remote monitoring and control system according to claim 1, in which the smartphone downloads updated microcontroller firmware and installs it into the microcontroller unit's non-volatile memory, in cooperation with bootloader firmware running on the microcontroller unit.

5. A remote monitoring and control system according to claim 1, in which separate sensor and/or actuators can be connected to general-purpose and inter-changeable ports on the microcontroller unit.

6. A remote monitoring and control system according to claim 1, in which the sensor and/or actuator units contain minimal interfacing logic and most of the interfacing logic is performed by the microcontroller unit.
